# EUROPÄISCHE PATENTSCHRIFT

(11) **EP 2 510 271 B1**
(45) Veröffentlichungstag und Bekanntmachung des Hinweises auf die Patenterteilung: **28.05.2014**
(21) Anmeldenummer: 10784821.0
(22) Anmeldetag: 06.12.2010
(51) Int. Cl.: F16L 33/207

(54) **QUETSCHKUPPLUNG FÜR EINE SCHLAUCHVERBINDUNG UND VERFAHREN ZUR HERSTELLUNG EINER SCHLAUCHVERBINDUNG MIT EINER QUETSCHKUPPLUNG**
CRIMPING CONNECTION FOR TUBES AND METHOD OF PRODUCTION OF A TUBE CONNECTION WITH SUCH A CRIMPING CONNECTION
RACCORD DE TUBE AVEC UN MANCHON DE COMPRESSION ET PROCÉDÉ DE FABRICATION D'UN TEL RACCORD AYANT UN MANCHON DE COMPRESSION

(30) Priorität: 08.12.2009 DE 102009044810
(43) Veröffentlichungstag der Anmeldung: 17.10.2012
(73) Patentinhaber: ContiTech Kühner GmbH & Cie. KG, 71570 Oppenweiler (DE)
(72) Erfinder: STEINBECK, Josef, 71522 Backnang (DE); DRAVE, Carmen, 74395 Mundelsheim (DE); HÜBL, Stefan, 71570 Oppenweiler (DE); MESSERSCHMIDT, Jonathan, 71540 Murrhardt (DE)
(74) Vertreter: Finger, Karsten
(86) Internationale Anmeldenummer: PCT/EP2010/068918
(87) Internationale Veröffentlichungsnummer: WO 2011/069937

(56) Entgegenhaltungen:
- DE-A1- 10 246 226
- DE-U1- 9 104 415
- DE-U1- 20 221 504
- JP-A- 8 075 068
- US-A- 4 522 435
- US-A- 5 622 394

## Beschreibung

Die Erfindung betrifft eine Quetschkupplung für eine Schlauchverbindung mit einem Rohrleitungsnippel zum Anschluss eines Schlauches und eine koaxiale, unter radialem Druck verformte Quetschhülse, wobei in einer Umfangsausnehmung des Nippels ein Dichtring angeordnet ist.
Für die Herstellung von starr-flexiblen Leitungssystemen, die einerseits aus flexiblen, aus elastomerem Werkstoff bestehenden Schläuchen mit oder ohne einer inneren Dichtfolie aus thermoplastischem Material als Innenschicht und andererseits aus Rohren aus metallischen Werkstoffen, z.B. Aluminium, bestehen und insbesondere bei mobilen Klimaanlagen für Kraftfahrzeuge eingesetzt werden, ist es bekannt, den Schlauch eng passend auf ein zu einem Nippel umgeformtes Ende des Rohres aufzuschieben und dort mit Hilfe einer Quetschhülse zu fixieren. Der Schlauch wird zwischen der Quetschhülse und dem Nippel eingeklemmt. Um eine Leckage der geführten Fluide über die gesamte Lebensdauer des Leitungssystems minimal zu halten, befinden sich in dem Bereich der Einbindung, d.h. der Quetschzone, ein oder mehrere Dichtringe aus einem Elastomerwerkstoff zwischen dem Nippel und dem aufgeschobenen Schlauch.
Bei der Montage der Quetschkupplung wird nach dem Aufziehen der Dichtringe auf den Nippel in einem separaten Prozessschritt die Quetschhülse mit einem stirnseitigen Ende auf dem Nippel mit Abstand zum freien Nippelende fest oder lose eingehängt oder auf das Schlauchende lose passend aufgeschoben. Anschließend wird der Schlauch auf den Nippel aufgeschoben und über das radiale Zusammenpressen der Quetschhülse auf dem Nippel durch Pressen fixiert.

Aus DE 91 02 495 U1 ist eine Quetschkupplung bekannt, die zwei im Abstand zueinander auf dem Umfang des Nippels angeordnete O-Ringe aufweist, die in jeweils einer halbkreisförmigen Querschnitt aufweisenden Nut im Umfang des Nippels als Dichtsitz angeordnet sind. Die Herstellung dieser zwei Nuten als Dichtsitze für die O-Ringe benötigt ein radiales Einformen der Nuten über einen spanenden Prozess, wie Eindrehen, und ein folgendes Entgraten.

Aus DE 41 20 529 C2 ist eine Quetschkupplung bekannt, die einen auf dem Umfang des Nippels angeordneten O-Ring in einer in die Oberfläche des Nippels eingearbeiteten Nut aufweist. In Abständen zu dem O-Ring sind ringförmige Halterippen auf dem Nippel vorhanden, die ein Wiederabziehen des Schlauches vom Nippel nach dem Verpressen durch die Quetschhülse verhindern sollen. Die Herstellung der Nut als Dichtsitz für den O-Ring und die Herstellung der Halterippen erfordern mehrere separate mechanische Bearbeitungsschritte, wie radiales Umformen oder spanende Prozesse, wie Eindrehen und folgendes Entgraten. Spanende Prozesse beinhalten die Gefahr des Einbringens von Spänen in die Rohrleitung, was im schlimmsten Fall zu einem Versagen des Fluidsystems führen kann.
Aus US 4 522 435 ist eine Quetschkupplung bekannt, deren Quetschhülse mit einer radial verlaufenden Stirnwand gegen einen Stauchbund auf dem Nippel anliegt. Auf dem Umfang des Nippels ist ein O-Ring in einer eingearbeiteten Nut angeordnet. In axialen Abständen zu dem O-Ring sind sägezahnähnliche Ringrippen auf dem Nippel vorhanden, die gegen ein Wiederabziehen des Schlauches vom Nippel nach dem Verpressen durch die Quetschhülse wirken sollen. Die Herstellung der Nut als Dichtsitz für den O-Ring und die Herstellung der Ringrippen erfordern mehrere separate mechanische Bearbeitungsschritte, wie radiales Umformen oder spanende Prozesse, wie Eindrehen und folgendes Entgraten.
Aus US 2004/0130148 A1 ist eine Quetschkupplung bekannt, deren Quetschhülse mit dem kreisförmigen Öffnungsende einer radial verlaufenden Stirnwand in einer ringförmigen, rechteckigen Umfangsnut auf dem Nippel eingesteckt ist. Auf dem Umfang des Nippels sind zwei O-Ringe in jeweils einer durch radiales Eindrücken der Nippelwand eingearbeiteten Nut angeordnet. Die Herstellung der Nuten als Dichtsitze für die O-Ringe und die Herstellung der rechteckigen Umfangsnut für die Stirnwand der Quetschhülse erfordert als separate mechanische spanlose Bearbeitungsschritte ein radiales Umformen der Wand des Nippels. Über geeignete Rollpresswerkzeuge wird die Wand des Nippels örtlich eingedrückt. Diese verwendete Doppel-O-Ring-Abdichtung hat den Nachteil, dass die Umfangsnut und die Nuten, die die Dichtsitze darstellen, Verengungen des inneren Querschnitts verursachen, wodurch Druckverluste in dem Fluidkreislauf entstehen und die Leistung des Fluidsystems verringert wird. Außerdem benötigt die Einbindung einen verhältnismäßig großen Bauraum.

Die US 5 622 394 A betrifft eine Quetschkupplung für eine Schlauchverbindung mit einem Rohrleitungsnippel zum Anschluss eines Schlauches und mit einer koaxialen, unter radialem Druck auf dem Schlauch verformten Quetschhülse mit folgenden Merkmalen:
- die Geometrie des Nippels ist durch einen axialen spanlosen Umformprozess hergestellt;
- der Nippel ist im der Rohrleitung zugewandten Bereich mit einem gefalteten, äußeren Anschlagbund versehen, an den sich eine flache Auflagezone anschließt;
- die Auflagezone endet an einem Stauchbund mit kleinerem Außendurchmesser;
- zum freien Ende des Nippels hin ist eine sich im Durchmesser verkleinernde Auslaufzone angeordnet;
- der Anschlagbund ist auf einer Seite von einem umgebördelten Endabschnitt der Quetschhülse umfasst;
- die Quetschhülse weist zwischen Anschlagbund und Stauchbund nahe am Anschlagbund einen ersten radialen Pressbereich und im Bereich der Auslaufzone einen zweiten radialen Pressbereich auf.

Der Erfindung liegt die Aufgabe zugrunde, eine Quetschkupplung der eingangs beschrieben Art derart auszugestalten, dass der Herstellungsaufwand minimiert und eine hohe Dichtheit erreicht wird.

Die Aufgabe wird erfindungsgemäß durch die Kombination der folgenden Merkmale gemäß Anspruch 1 gelöst:
- die Geometrie des Nippels ist durch einen axialen spanlosen Umformprozeß hergestellt;
- der Nippel ist im der Rohrleitung zugewandten Bereich mit einem gefalteten, äußeren Anschlagbund versehen, an den sich eine flache Auflagezone anschließt;
- die Auflagezone endet an einem Stauchbund mit kleinerem Außendurchmesser, an den sich eine nach innen gerichtete Ausbuchtung der Nippelwand anschließt, in der der Dichtring angeordnet ist;
- zum freien Ende des Nippels hin ist eine sich im Durchmesser verkleinernde Auslaufzone angeordnet;
- in der Quetschhülse ist eine radiale kreisringförmige Wand angeordnet, die an dem Anschlagbund anliegt, der auf seiner anderen Seite von einem umgebördelten Endabschnitt der Quetschhülse umfasst ist;
- die Quetschhülse weist zwischen Anschlagbund und Stauchbund nahe am Anschlagbund einen ersten radialen Pressbereich und im Bereich der Auslaufzone einen zweiten radialen Pressbereich auf.
Die erfindungsgemäße Quetschkupplung zeichnet sich durch eine Übertragung hoher Haltekräfte der Schlaucheinbindung in axialer und radialer Richtung aus. Es ist eine größere Kraftübertragung zwischen Rohr und Einbindung sowohl in axialer wie auch in radialer Richtung möglich. Die axiale Kraftübertragung erfolgt durch die Umbördelung des Anschlagbundes mit dem Endabschnitt der Quetschhülse. Die radiale Kraftübertragung erfolgt durch die Aufbördelung auf dem Anschlagbund.
Durch die Erfindung wird eine dichte und zugfeste Einbindung des Schlauches in der Quetschkupplung erreicht, so dass schon mit nur einem Dichtring auf dem Nippel die Anforderungen erfüllt werden, was sich in einer kürzeren Bauweise der Quetschkupplung vorteilhaft niederschlägt.

Bei der Erfindung kann auch durch entsprechend gewählte Verformung des Rohrendes zum Nippel der minimale innere Querschnitt im Bereich der Einbindung vergrößert werden, wodurch die Strömungsverhältnisse optimiert und die Druckverluste reduziert werden.
In vorteilhafter Ausbildung der Erfindung ist die Ausbuchtung der Nippelwand für den Dichtsitz im Querschnitt mit einem länglichen Fußbett ausgebildet, in der ein D-förmiger Dichtring angeordnet ist. Dieser ist im Vergleich zum klassischen O-Ring breiter, hat aber eine geringere Höhe. Dadurch kann die Nuttiefe des Dichtsitzes geringer ausfallen und die Dichtfläche ist breiter. Der D-Ring sitzt durch die breitere Auflagefläche besser auf dem Nippel als ein O-Ring.

In weiterer vorteilhafter Ausbildung der Erfindung weist die Quetschhülse im Bereich des Dichtsitzes einen dritten radialen Pressbereich auf. Durch diese dritte Pressreihe lässt sich eine klar bestimmte Dichtkraft über dem Dichtsitz einstellen.
Die Erfindung betrifft auch ein Verfahren zur Herstellung einer Schlauchverbindung mit einer Quetschkupplung.
Bei der Erfindung wird die Nippelgeometrie der Schlaucheinbindung ausschließlich durch einen axialen Umformprozeß, der in zwei oder drei Schritten in einem Maschinenvorgang abläuft, erzeugt. Es ist kein zusätzlicher radialer Umformprozeß (Walzen) zum Einbringen des Dichtsitzes nötig. Die Komplexität des gesamten Fertigungsprozesses ist auf ein Minimum reduziert. Durch das Vermeiden von spanabhebenden Prozessschritten können potentielle Problemstellen, wie Verunreinigungen durch Materialpartikel, die z.B. bei spanenden Prozessen entstehen, bereits prozeßbedingt ausgeschlossen werden.
Der Montageprozess wird durch die automatisch richtige Positionierung der Quetschhülse am Anschlagbund vereinfacht. Dadurch ist nur noch ein Prozessschritt in Form eines axialen Umformprozesses zum Verpressen der Einbindung nötig.

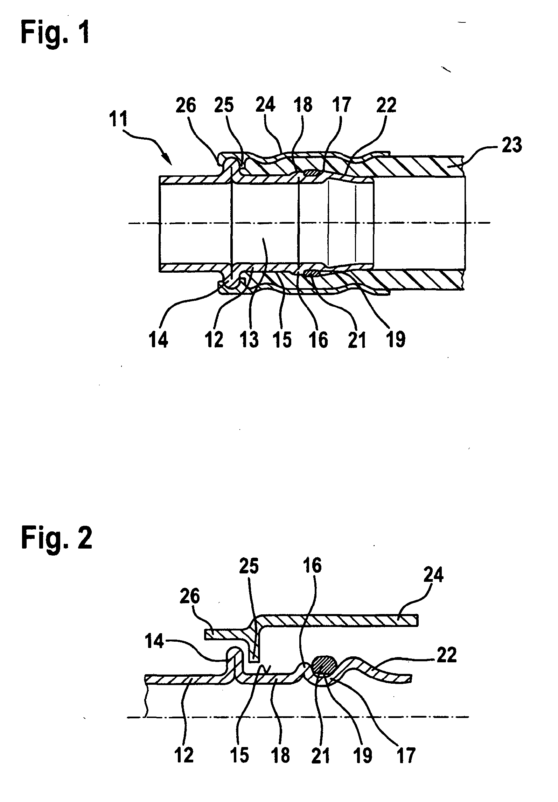

Durch die Erfindung wird eine Quetschkupplung mit einem robusten, d.h. einfachen Design durch einen einheitlichen Stauchprozess unter Bildung von zwei Stauchbunden am Rohrnippel geschaffen.
Anhand der Zeichnung werden nachstehend Ausführungsbeispiele der Erfindung näher erläuter. Es zeigt
Fig. 1 eine verpresste Schlauchverbindung mit einem Nippel, dessen Geometrie durch spanlose, stauchende Verformung erstellt ist, und mit einer eingehängten, verformten Quetschhülse im Längsschnitt;
Fig. 2 in schematischer Detaildarstellung einen halben Längsschnitt durch einen einen Dichtsitz aufweisenden Nippel und lose aufgeschobener, unverpresster Quetschhülse unter Fortlassung des zu verbindenden Schlauchendes;
Fig. 3 in schematischer Detaildarstellung einen halben Längsschnitt durch eine verpresste Quetschkupplung mit umgebenden Presswerkzeug;
Fig. 4 eine Ausführungsform des durch Stauchen hergestellten Nippels mit kleinerem Innendurchmesser in der Auflagezone des Schlauches als der Innendurchmesser der angrenzenden Rohrleitung;
Fig. 5 eine Ausführungsform des durch Stauchen hergestellten Nippels mit gleichem Innendurchmesser in der Auflagezone des Schlauches als der Innendurchmesser der angrenzenden Rohrleitung;
Fig. 6 eine Ausführungsform des durch Stauchen hergestellten Nippels mit größerem Innendurchmesser in der Auflagezone des Schlauches als der Innendurchmesser der angrenzenden Rohrleitung;
Fig. 7 eine Außenansicht der Quetschkupplung mit umfangsmäßig verlaufenden geraden Presslinien in den radialen Pressbereichen;
Fig. 8 eine Außenansicht der Quetschkupplung mit umfangsmäßig verlaufender W-förmiger bzw. zick-zack-förmiger Presslinie in einem radialen Pressbereich.
Aus Fig. 1 ist eine Schlauchverbindung mit einer Quetschkupplung ersichtlich, die eine Rohrleitung 11 aufweist, deren Ende mit einem angeformten Nippel 12 versehen ist, dessen innerer Durchlass 13 mit der Rohrleitung 11 fluchtet. Die Nippelgeometrie für die Schlaucheinbindung ist durch einen axialen Umformprozeß, vorzugsweise einem Stauchpressen, erzeugt worden. Der Nippel 12 ist im der Rohrleitung 11 zugewandten Bereich mit einem durch den Stauchprozess hergestellten, gefalteten, äußeren Anschlagbund 14 versehen, an den sich eine flache Auflagezone 15 anschließt.
Diese Auflagezone 15 endet in einem Stauchbund 16 kleineren Außendurchmessers, an den sich eine mit im Querschnitt länglichen Fußbett ausgebildete Ausbuchtung 17 der Nippelwand 18 anschließt, die einen Dichtsitz 19 für einen aus elastomerem, permeationsarmem Werkstoff (z.B. EPDM, HNBR) bestehenden Dichtring 21 darstellt, der im Querschnitt gesehen D-förmig ausgebildet ist. Der D-förmige Dichtring 21 ist im Vergleich zum klassischen O-Ring breiter, hat aber eine geringere Höhe. Dadurch kann die Nuttiefe des Dichtsitzes geringer ausfallen und die Dichtfläche ist breiter. Der D-Ring sitzt durch die breitere Auflagefläche besser auf dem Nippel als ein O-Ring.
An diese Ausbuchtung 17 schließt sich zum freien Ende des Nippels 12 hin eine sich im Durchmesser verkleinernde Auslaufzone (Aufschieberampe) 22 an, durch die ein Aufschieben des Endes eines flexiblen Schlauches 23 erleichtert wird.

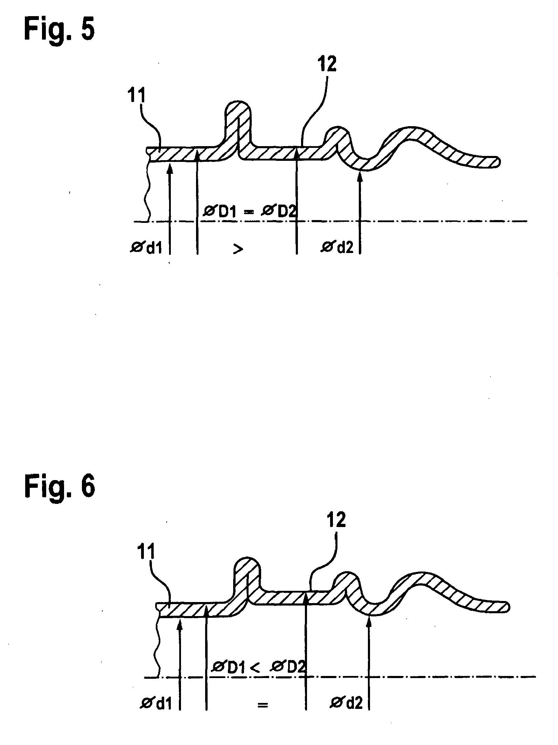

Das zwischen dem Nippel 12 und einer koaxial angeordneten, radial verformten Quetschhülse 24 festgeklemmte Schlauchende 23 liegt stirnseitig an einer radialen kreisringförmigen Wand 25 der Quetschhülse 24 an.
Die radiale kreisringförmige Wand 25 der Quetschhülse 24 dient als Positionierungsanschlag für die Quetschhülse an dem Anschlagbund 14. Auf der anderen Seite wird der Anschlagbund 14 von einem umgebogenen Endabschnitt 26 der Quetschhülse 24 umfasst. Die Quetschhülse 24 ist dadurch positioniert und fixiert. Die Quetschhülse 24 ist im Bereich der Auflagezone 15 und im Bereich der Auslaufzone 22 radial nach innen verpresst, was zu einer ausreichenden Verklemmung des Schlauchendes 23 auf dem Nippel 12 führt.
In Fig. 2 werden der Nippel 12 und die darüber geschobene Quetschhülse 24 in unverpresstem Zustand und ohne eingeschobenes Schlauchende gezeigt.
Der aus dem umgeformte Rohrende 11 erzeugte Nippel 12 ist durch einen axialen Umformprozeß (Kaltumformen) in mehreren Stufen hergestellt. Die wesentlichen Merkmale der so erstellten Geometrie des Nippels 12 sind die folgenden:
- Anschlagbund 14 als Positionieranschlag für die unverformte Quetschhülse 24 und zur Erzeugung der Gegenkraft für das Einhängen (umbördeln) des Endabschnitts 26 der Quetschhülse 24.
- Stauchbund 16 definiert zum einen die genaue Positionierung des Dichtrings 21 und verhindert ein Verschieben des Dichtringes 21 beim Aufschieben des Schlauches 23.
- Dichtsitz 19 in der Ausbuchtung 17, die hier halbkreisförmig ausgebildet ist, der Nippelwand 18.
- Auslaufzone (Aufschieberampe) 22 weitet den Schlauch 23 auf, um bei der Montage ein Verschieben des Dichtringes 21, der hier ein O-Ring ist, zu verhindern.
Die radiale Wand 25 in der Quetschhülse 24 ist zum einen ein Montageanschlag, der die Einhaltung der definierten Position der Quetschhülse 24 gewährleistet und stellt zum anderen die Gegenfläche der Einhängung dar, durch die die radiale Kraftübertragung erzeugt wird.

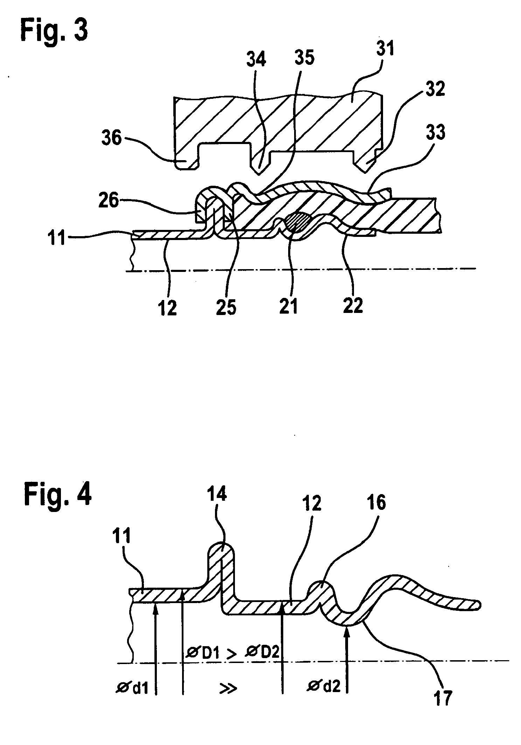

In Fig. 3 wird das Presswerkzeug 31 zum Verpressen der Quetschhülse 24 über den entsprechenden Pressbereichen der verpressten Quetschkupplung schematisch gezeigt. Die Verpressung hat unterschiedliche Funktionsbereiche, die durch verschiedene Stufen am Presswerkzeug 31 realisiert werden. Die Werkzeugstufe 32 formt die Abdichtungs- und Beruhigungszone 33. Die Werkzeugstufe 34 formt den Pressbereich 35 mit der Haltefunktion für den Schlauch 23. Die Werkzeugstufe 36 ist rechteckig oder dreieckig ausgebildet und sorgt für das Umbördeln des Endabschnitts 26, durch das die axiale Fixierung der Quetschhülse 24 erreicht wird.
In dem Presswerkzeug 31 werden Nippel 12 und Quetschhülse 24 zueinander zentriert und dann der Schlauch 23 auf den Nippel 12 aufgeschoben. In einem Vorgang wird mit dem Presswerkzeug 31 durch das Verpressen der Quetschhülse 24 der Schlauch 23 befestigt und die Quetschhülse 24 zusätzlich an dem Nippel 12 der Rohrleitung 11 fixiert. Die axiale Fixierung der Quetschhülse wird mit der Werkzeugstufe 36 bewirkt, durch die der Endabschnitt 26 um den Anschlagbund 14 gebördelt wird. Diese axiale Fixierung erhöht die Abzugskräfte der Quetschkupplung erheblich.
Die radiale Fixierung des Schlauches 23 wird in den Pressbereichen 33 und 35 hergestellt. Sie garantiert, dass keine Verdrehung zwischen dem Nippel 12 und dem
Schlauch 23 statt findet. Durch die Verpressung 35 der Quetschhülse 24 direkt hinter dem Stauchbund 16 wird die Haltekraft zwischen Schlauch 23 und Nippel 12 zusätzlich erhöht. Die Verpressung 33 hat zwei Funktionen. Zum einen dient der Bereich 33 der Beruhigung; es werden die Bewegungen des Schlauches 23 gedämpft, und zum Anderen dient der Bereich 33 der ersten Abdichtung des Nippels12.
Der Nippel 12 kann unterschiedlich ausgeführt sein. Im Folgenden werden drei Varianten unter Bezugnahme auf die Fig. 4 bis 6 beschrieben.
Fig. 4:
- D1 > D2:: Der Durchmesser D2 im Nippelbereich 12 ist kleiner als der Rohraußendurchmessers D1 der Rohrleitung 11.
- d1 >> d2:: Der Rohrinnendurchmesser d1 ist größer als der minimale Innendurchmesser d2 im Nippelbereich 12.
Dadurch kann es bei dieser Variante zwar zu Druckverlusten kommen. Der erfindungsgemäße Vorteil aufgrund der konstruktiv einfachen und sicheren Bauweise kompensiert diesen Nachteil aber bei einigen einfachen Anwendungen.
Fig. 5:
- D1 = D2: Der Rohraußendurchmesser D1 und der Durchmesser D2 des Nippelbereichs sind gleich groß.
- d1 > d2: Dadurch ist der minimale Innendurchmesser d2 des Nippelbereichs kleiner als der Rohrinnendurchmesser d1.
Durch diese Variante werden die bei den bekannten Lösungen des Standes der Technik aufgrund deren starker Querschnittsreduzierungen im Nippel bedingten Druckverluste minimiert. Durch eine Vergrößerung des minimalen inneren Querschnitts und einen vorteilhafteren Strömungsverlauf des geführten Mediums können die Druckverluste auf den minimalen Wert einer reinen Rohrleitung reduziert werden.
Fig. 6:
- D1 < D2: Der Rohraußendurchmesser D1 ist kleiner als der Durchmesser D2 des Nippelbereichs.
- d1 = d2: Rohrinnendurchmesser d1 und minimaler Innendurchmesser d2 des Nippels 12 sind gleich.
Bei dieser Variante entstehen keine Querschnittseinschnürungen. Sie kommt bezüglich der Druckverluste einer reinen Rohrleitung am nächsten.

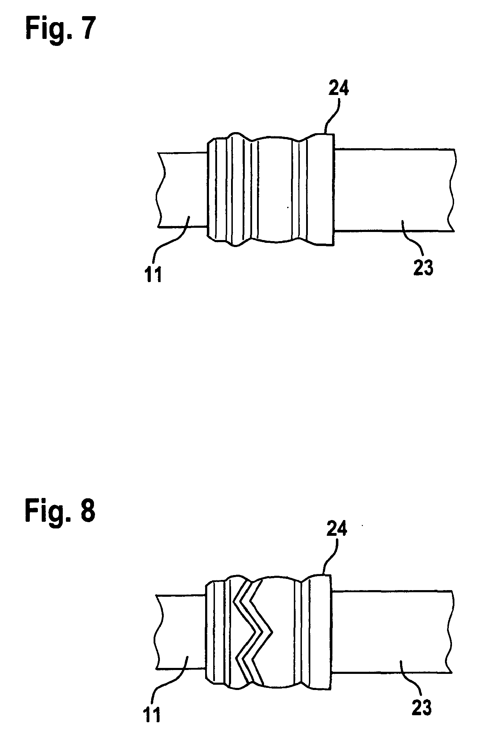

Das Pressbild der verformten Quetschhülse 24 kann unterschiedlich sein. In den Fig. 7 und 8 werden zwei Varianten dargestellt, die sich in der Realisierung des Pressbereiches 35 mit der Haltefunktion unterscheiden.

In Fig. 7 wird der Pressbereich 35 mit der Haltefunktion durch eine radial umlaufende linienförmige Pressreihe realisiert die zwischen Wand 25 und Stauchbund 16 liegt. Dadurch wird die Haltekraft zwischen Schlauch 23 und Nippel 12 realisiert.

In Fig. 8 wird der Pressbereich 35 durch eine Einpressung erzielt, die W-förmig um den Umfang verläuft. Dadurch wird die Länge der Pressreihe vergrößert und die Pressung ist flächig. Die Haltekraft zwischen Schlauch 23 und Nippel 12 kann so weiter erhöht werden.

### Bezugszeichenliste

- 11: Nippel
- 12: Rohrleitung
- 13: innerer Durchlass
- 14: Anschlagbund
- 15: Auflagezone
- 16: Stauchbund
- 17: Ausbuchtung
- 18: Nippelwand
- 19: Dichtsitz
- 21: Dichtring
- 22: Auslaufzone (Aufschieberampe)
- 23: Schlauch
- 24: Quetschhülse
- 25: radiale Wand
- 26: Endabschnitt Quetschhülse
- 31: Presswerkzeug
- 32: Werkzeugstufe
- 33: Abdichtungs- und Beruhigungszone
- 34: Werkzeugstufe
- 35: Pressbereich Haltefunktion
- 36: Werkzeugstufe

## Patentansprüche

1. Quetschkupplung für eine Schlauchverbindung mit einem Rohrleitungsnippel (12) zum Anschluss eines Schlauches (23) und mit einer koaxialen, unter radialem Druck auf dem Schlauch verformbaren Quetschhülse (24), wobei in einer Umfangsausnehmung des Nippels (12) ein Dichtring (21) angeordnet ist,
wobei die Quetschkupplung folgende Merkmale aufweist:
- die Geometrie des Nippels (12) ist durch einen axialen spanlosen Umformprozeß hergestellt;
- der Nippel (12) ist im der Rohrleitung (11) zugewandten Bereich mit einem gefalteten, äußeren Anschlagbund (14) versehen, an den sich eine flache Auflagezone (15) anschließt;
- die Auflagezone (15) endet an einem Stauchbund (16) mit kleinerem Außendurchmesser als dem gefalteten, äußeren Anschlagbund (14),
- an den Stauchbund (16) schließt sich eine nach innen gerichtete Ausbuchtung (17) der Nippelwand (18) an, in der der Dichtring (21) angeordnet ist;
- zum freien Ende des Nippels (12) hin ist eine sich im Durchmesser verkleinernde Auslaufzone (22) angeordnet, die sich an die Ausbuchtung (17) anschließt und das Aufschieben eines Endes des Schlauches erleichtert;
- in der Quetschhülse (24) ist eine radiale kreisringförmige Wand (25) angeordnet; die an dem Anschlagbund (14) anlegt, der auf seiner anderen Seite von einem zu umbördelnden Endabschnitt (26) der Quetschhülse (24) umfasst werden kann; und
- die Quetschhülse (24) weist zwischen Anschlagbund (14) und Stauchbund (16) nahe am Anschlagbund (14) einen ersten radialen Pressbereich (35) und im Bereich der Auslaufzone (22) einen zweiten radialen Pressbereich (33) auf.

2. Quetschkupplung nach Anspruch 1, **dadurch gekennzeichnet, dass** die Ausbuchtung (17) der Nippelwand (18) für den Dichtsitz (19) im Querschnitt mit einem länglichen Fußbett ausgebildet ist, in der ein D-förmiger Dichtring (21) angeordnet ist.

3. Quetschkupplung nach Anspruch 1 oder **dadurch gekennzeichnet, dass** die Quetschhülse (24) im Bereich des Dichtsitzes (19) einen dritten radialen Pressbereich (33) aufweist.

4. Verfahren zur Herstellung einer Quetschkupplung nach den Merkmalen des Patentanspruchs 1 sowie zum Anchluss eines Schlauches (23), **gekennzeichnet durch** folgende Schritte:
- die Geometrie des Nippels (12) wird **durch** einen axialen spanlosen Umformprozeß hergestellt, **durch** den ein Anschlagbund (14) als Positionieranschlag für das Einhängen der Quetschhülse (24), ein Stauchbund (16) zur genauen Positionierung des Dichtrings des Schlauchs (23) im verpressten Zustand, eine Ausbuchtung (17) der Nippelwand (18) als Dichtsitz und eine Auslaufzone (22) gebildet werden;
- in einem radialen Pressvorgang wird **durch** das radiale Verpressen der Quetschhülse (24) der Schlauch (23) auf dem Nippel (12) befestigt und die Quetschhülse (24) gleichzeitig an dem Nippel (12) der Rohrleitung (11) **durch** Umbördeln des Endabschnitts (26) um den Anschlagbund (14) fixiert.

## Claims

1. Crimped coupling for a hose connection with a pipeline nipple (12) for connecting a hose (23) and with a coaxial crimping sleeve (24) deformable under radial pressure on the hose, a sealing ring (21) being arranged in a circumferential recess of the nipple (12), the crimped coupling having the following features:
- the geometry of the nipple (12) is produced by means of an axial non-cutting forming process;
- the nipple (12) is provided, in the region facing the pipeline (11), with a folded outer stop collar (14) which a flat bearing zone (15) adjoins;
- the bearing zone (15) terminates at an upset collar (16) having a smaller outside diameter than the folded outer stop collar (14),
- the upset collar (16) is followed by an inwardly directed concavity (17) of the nipple wall (18), in which concavity the sealing ring (21) is arranged;
- towards the free end of the nipple (12), a run-out zone (22) is arranged, which decreases in diameter and which follows the concavity (17) and makes it easier to push on one end of the hose;
- in the crimping sleeve (24), a radial annular wall (25) is arranged, which bears against the stop collar (14) which on its other side can be surrounded by a flangeable end portion (26) of the crimping sleeve (24); and
- the crimping sleeve (24) has between the stop collar (14) and upset collar (16), near the stop collar (14), a first radial pressing region (35) and, in the region of the run-out zone (22), a second radial pressing region (33).

2. Crimped coupling according to Claim 1, **characterized in that** the concavity (17) of the nipple wall (18) for the sealing seat (19) is formed in cross section with an elongate foot bed in which a D-shaped sealing ring (21) is arranged.

3. Crimped coupling according to Claim 1 or 2, **characterized in that** the crimping sleeve (24) has a third radial pressing region (33) in the region of the sealing seat (19).

4. Method for producing a crimped coupling according to the features of patent Claim 1 and for connecting a hose (23), **characterized by** the following steps:
- the geometry of the nipple (12) is produced by means of an axial non-cutting forming process, by means of which a stop collar (14) is formed as a positioning stop for catching the crimping sleeve (24), an upset collar (16) is formed for the exact positioning of the sealing ring of the hose (23) in the pressed state, a concavity (17) of the nipple wall (18) is formed as a sealing seat and a run-out zone (22) is formed;
- in a radial pressing operation, by the crimping sleeve (24) being pressed radially, the hose (23) is fastened on the nipple (12) and simultaneously fixes the crimping sleeve (24) to the nipple (12) of the pipeline (11) by the end portion (26) being flanged around the stop collar (14).

## Revendications

1. Manchon de compression pour un raccord de tube comprenant un raccord fileté de conduite tubulaire (12) pour le raccordement d'un tube (23) et comprenant une douille de compression coaxiale (24) déformable dans le cas de l'application d'une pression radiale sur le tube, une bague d'étanchéité (21) étant disposée dans un évidement périphérique du raccord fileté (12),
le manchon de compression présentant les caractéristiques suivantes :
- la géométrie du raccord fileté (12) est produite par un processus de formage axial sans enlèvement de copeaux ;
- le raccord fileté (12) est pourvu d'un épaulement de butée extérieur plié (14) dans la région tournée vers la conduite tubulaire (11), auquel se raccorde une zone d'appui plane (15) ;
- la zone d'appui (15) se termine au niveau d'un épaulement de refoulement (16) de plus petit diamètre extérieur que l'épaulement de butée extérieur plié (14),
- à l'épaulement de refoulement (16) se raccorde un renflement (17), orienté vers l'intérieur, de la paroi du raccord fileté (18), dans lequel est disposée la bague d'étanchéité (21) ;
- vers l'extrémité libre du raccord fileté (12) est disposée une zone de sortie (22) dont le diamètre diminue, laquelle se raccorde au renflement (17) et facilite l'enfoncement d'une extrémité du tube ;
- dans la douille de compression (24) est disposée une paroi annulaire circulaire radiale (25), laquelle s'applique contre l'épaulement de butée (14) qui peut être entouré sur son autre côté par une portion d'extrémité (26) de la douille de compression (24) devant être repliée ; et
- la douille de compression (24) présente, entre l'épaulement de butée (14) et l'épaulement de refoulement (16) à proximité de l'épaulement de butée (14), une première région de pressage radiale (35) et, dans la région de la zone de sortie (22), une deuxième région de pressage radiale (33).

2. Manchon de compression selon la revendication 1, **caractérisé en ce que** le renflement (17) de la paroi de raccord fileté (18) pour le siège d'étanchéité (19) est réalisé en section transversale avec une base allongée dans laquelle est disposée une bague d'étanchéité en forme de D (21).

3. Manchon de compression selon la revendication 1 ou 2, **caractérisé en ce que** la douille de compression (24) présente, dans la région du siège d'étanchéité (19), une troisième région de pressage radiale (33).

4. Procédé de fabrication d'un manchon de compression selon les caractéristiques de la revendication 1 ainsi que pour le raccordement d'un tube (23), **caractérisé par** les étapes suivantes :
- la géométrie du raccord fileté (12) est produite par un processus de formage axial sans enlèvement de copeaux, par lequel sont formés un épaulement de butée (14) en tant que butée de positionnement pour accrocher la douille de compression (24), un épaulement de refoulement (16) pour le positionnement précis de la bague d'étanchéité du tube (23) dans l'état pressé, un renflement (17) de la paroi de raccord fileté (18) en tant que siège d'étanchéité et une zone de sortie (22) ;
- dans une opération de pressage radiale, par le pressage radial de la douille de compression (24), le tube (23) est fixé sur le raccord fileté (12) et la douille de compression (24) est fixée simultanément au raccord fileté (12) de la conduite tubulaire (11) par pliage de la portion d'extrémité (26) autour de l'épaulement de butée (14).
